(19) Europäisches Patentamt
European Patent Office
Office européen des brevets

(11) **EP 4 694 093 A1**

(12) **EUROPEAN PATENT APPLICATION**
published in accordance with Art. 153(4) EPC

(43) Date of publication:
**11.02.2026 Bulletin 2026/07**

(21) Application number: **24802831.8**

(22) Date of filing: **29.04.2024**

(51) International Patent Classification (IPC):
***H04L 69/16*** *(2022.01)*

(52) Cooperative Patent Classification (CPC):
**H04L 47/32; H04L 69/16**

(86) International application number:
**PCT/CN2024/090516**

(87) International publication number:
**WO 2024/230547 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023 CN 202310518999**

(71) Applicant: **Huawei Technologies Co., Ltd.**
**Shenzhen, Guangdong 518129 (CN)**

(72) Inventors:
• **DUAN, Yingjie**
**Shenzhen, Guangdong 518129 (CN)**
• **XU, Anmin**
**Shenzhen, Guangdong 518129 (CN)**
• **REN, Shoushou**
**Shenzhen, Guangdong 518129 (CN)**
• **LIU, Bingyang**
**Shenzhen, Guangdong 518129 (CN)**

(74) Representative: **Isarpatent**
**Patent- und Rechtsanwälte Partg mbB**
**Friedrichstraße 31**
**80801 München (DE)**

(54) **DATA TRANSMISSION METHOD, APPARATUS, DEVICE AND COMPUTER-READABLE STORAGE MEDIUM**

(57) This application relates to the field of communication technologies, and discloses a data transmission method, apparatus, and device, and a computer-readable storage medium. When a first data packet is a tail packet of a data stream, a first node generates a plurality of second data packets corresponding to the first data packet, where a payload of any second data packet is the same as a payload of the first data packet, and a quantity of the plurality of second data packets is determined based on a transmission parameter of a network for transmitting the data stream; and the first node sends the first data packet and the plurality of second data packets, where the plurality of second data packets are used to reduce a packet loss probability of the tail packet of the data stream. According to the method, redundancy protection is performed on the tail packet of the data stream, to reduce the packet loss probability of the tail packet. This reduces a transmission delay of the data stream, and improves data transmission quality and performance. In addition, a redundant quantity of a plurality of tail packets is determined. This can not only prevent the plurality of sent tail packets from being consecutively lost but also prevent a waste of transmission resources due to an excessively large redundant quantity.

When a first data packet is a tail packet of a data stream, a first node generates a plurality of second data packets corresponding to the first data packet, where a payload of any second data packet is the same as a payload of the first data packet, and a quantity of the plurality of second data packets is determined based on a transmission parameter of a network for transmitting the data stream ⟶ 301

The first node sends the first data packet and the plurality of second data packets, where the plurality of second data packets are used to reduce a packet loss probability of the tail packet of the data stream ⟶ 302

FIG. 3

## Description

This application claims priority to Chinese Patent Application No. 202310518999.8, filed on May 9, 2023 and entitled "DATA TRANSMISSION METHOD, APPARATUS, AND DEVICE, AND COMPUTER-READABLE STORAGE MEDIUM", which is incorporated herein by reference in its entirety.

## TECHNICAL FIELD

This application relates to the field of communication technologies, and in particular, to a data transmission method, apparatus, and device, and a computer-readable storage medium.

## BACKGROUND

In a data transmission process, if a data packet at a tail of a data stream is lost, a tail loss probe (tail loss probe, TLP) mechanism or a retransmission timeout (retransmission timeout, RTO) mechanism is triggered to implement lost packet retransmission. However, retransmission delays caused by the TLP mechanism and the RTO mechanism are usually large.

## SUMMARY

This application provides a data transmission method, apparatus, and device, and a computer-readable storage medium, to redundantly send a plurality of tail packets of a data stream.

According to a first aspect, a data transmission method is provided. The method includes: When a first data packet is a tail packet of a data stream, a first node generates a plurality of second data packets corresponding to the first data packet, where a payload (payload) of any second data packet is the same as a payload of the first data packet, and a quantity of the plurality of second data packets is determined based on a transmission parameter of a network for transmitting the data stream. The first node sends the first data packet and the plurality of second data packets, where the plurality of second data packets are used to reduce a packet loss probability of the tail packet of the data stream.

According to the method, redundancy protection is performed on the tail packet of the data stream, that is, a plurality of redundant tail packets are sent, to reduce the packet loss probability of the tail packet, avoid data retransmission that is in an RTO mechanism or a TLP mechanism and that is triggered by a loss of the tail packet, and thus avoid a waiting delay caused by triggering the RTO mechanism or the TLP mechanism. This reduces a transmission delay of the data stream, and improves data transmission quality and performance. In addition, in embodiments of this application, a redundant quantity of the plurality of tail packets is determined based on the transmission parameter of the network for transmitting the data stream. This can not only prevent the plurality of sent tail packets from being consecutively lost but also prevent a waste of transmission resources due to an excessively large redundant quantity. In this way, the determined redundant quantity of the plurality of tail packets better meets a data transmission requirement.

In a possible implementation, the transmission parameter includes consecutive packet loss rates that are for different unit quantities and that correspond to the network. Before the first node generates the plurality of second data packets corresponding to the first data packet, the first node performs function fitting on the consecutive packet loss rates that are for the different unit quantities and that correspond to the network, to obtain a function relationship between a redundant quantity and a success probability, where the success probability is a probability that at least one of the redundant quantity of data packets that are consecutively sent is received. The first node obtains a redundant quantity corresponding to a success probability greater than or equal to a probability threshold in the function relationship, and determines the quantity of the plurality of second data packets based on the redundant quantity corresponding to the success probability greater than or equal to the probability threshold. A more accurate quantity of the plurality of second data packets is obtained through function fitting, so that a probability that at least one of the plurality of sent second data packets is received is greater than or equal to the probability threshold, that is, a probability that the tail packet is received is greater than or equal to the probability threshold.

In a possible implementation, the first data packet and the plurality of second data packets are transmitted based on quick user datagram protocol internet connections (quick user datagram protocol internet connections, QUIC), the quantity of the plurality of second data packets is K, a sequence number of the first data packet is N, and both K and N are positive integers; and sequence numbers of the plurality of second data packets are different from the sequence number of the first data packet, the sequence numbers of the plurality of second data packets are N + n, N + n + 1, ..., and N + n + K - 1, and n is determined based on a packet threshold corresponding to the QUIC. The method provides a manner of setting the sequence numbers of the plurality of second data packets in the QUIC-based transmission scenario, so that the method can be applied to the QUIC-based transmission scenario. This improves implementation flexibility of the method.

In a possible implementation, after the first node sends the first data packet and the plurality of second data packets, in the case of QUIC-based transmission, based on a received acknowledgment message for any data packet among the first data packet and the plurality of second data packets, for a third data packet that is in the data stream and that is sent before the any data packet but is unacknowledged, if a difference between a sequence number of the any data packet and a sequence number of the third data packet is greater than or equal to the packet threshold, the first node triggers retransmission of a payload of the third data packet. According to the method, when a plurality of data packets at a tail of the data stream transmitted based on the QUIC are consecutively lost, redundant tail packets are sent to quickly trigger retransmission of the lost packets. This reduces a delay caused by retransmission of the lost packets.

In a possible implementation, the first data packet and the plurality of second data packets are transmitted based on a transmission control protocol (transmission control protocol, TCP), and sequence numbers of the plurality of second data packets are the same as a sequence number of the first data packet. After the first node generates the plurality of second data packets corresponding to the first data packet, the first node obtains a mapping relationship between the sequence number of the first data packet and a redundant sequence number, where the redundant sequence number is a sum of the sequence number of the first data packet and n, and n may be determined based on a duplicate threshold corresponding to the TCP. The method provides a manner of setting the sequence numbers of the plurality of second data packets in the TCP-based transmission scenario, so that the method can be applied to the TCP-based transmission scenario. This improves implementation flexibility of the method.

In a possible implementation, after the first node sends the first data packet and the plurality of second data packets, in the case of TCP-based transmission, based on a received acknowledgment message for any data packet among the first data packet and the plurality of second data packets, for a third data packet that is in the data stream and that is sent before the any data packet but is unacknowledged, the first node obtains, from the mapping relationship, a redundant sequence number corresponding to a sequence number of the any data packet. If a difference between the redundant sequence number and a sequence number of the third data packet is greater than or equal to the duplicate threshold, the first node triggers retransmission of a payload of the third data packet. Therefore, when a plurality of data packets at a tail of the data stream transmitted based on the TCP are consecutively lost, redundant tail packets are sent to quickly trigger retransmission of the lost packets. This reduces a delay caused by retransmission of the lost packets.

In a possible implementation, before generating the plurality of second data packets corresponding to the first data packet, the first node determines whether the first data packet is the tail packet of the data stream. A manner of determining whether the first data packet is the tail packet of the data stream may be: when first duration elapses after the first data packet is added to a send queue, if no data packet belonging to the data stream is added to the send queue, determining that the first data packet is the tail packet of the data stream; or determining, based on an identifier that indicates the tail packet and that is carried in the first data packet, that the first data packet is the tail packet of the data stream. Whether the first data packet is the tail packet of the data stream is determined based on a situation of adding a data packet to the send queue, or the tail packet is directly identified by using the carried identifier. This improves accuracy and flexibility of tail packet identification.

According to a second aspect, a data transmission apparatus is provided. The apparatus includes: a generation module, configured to: when a first data packet is a tail packet of a data stream, generate a plurality of second data packets corresponding to the first data packet, where a payload of any second data packet is the same as a payload of the first data packet, and a quantity of the plurality of second data packets is determined based on a transmission parameter of a network for transmitting the data stream; and a sending module, configured to send the first data packet and the plurality of second data packets, where the plurality of second data packets are used to reduce a packet loss probability of the tail packet of the data stream.

In a possible implementation, the transmission parameter includes consecutive packet loss rates for different unit quantities, and the apparatus further includes: a fitting module, configured to perform function fitting on the consecutive packet loss rates that are for the different unit quantities and that correspond to the network, to obtain a function relationship between a redundant quantity and a success probability, where the success probability is a probability that at least one of the redundant quantity of data packets that are consecutively sent is received; and a first determining module, configured to: obtain a redundant quantity corresponding to a success probability greater than or equal to a probability threshold in the function relationship, and determine the quantity of the plurality of second data packets based on the redundant quantity corresponding to the success probability greater than or equal to the probability threshold.

In a possible implementation, the first data packet and the plurality of second data packets are transmitted based on QUIC, the quantity of the plurality of second data packets is K, a sequence number of the first data packet is N, and both K and N are positive integers; and sequence numbers of the plurality of second data packets are different from the sequence number of the first data packet, the sequence numbers of the plurality of second data packets are $N + n$, $N + n + 1$, ..., and $N + n + K - 1$, and n is determined based on a packet threshold corresponding to the QUIC.

In a possible implementation, the apparatus further includes a retransmission module, configured to: based on a received acknowledgment message for any data packet among the first data packet and the plurality of second data packets, for a third data packet that is in the data stream and that is sent before the any data packet but is unacknowledged, if a difference between a sequence number of the any data packet and a sequence number of the third data packet is greater than or equal to the packet threshold, trigger retransmission of a payload of the third data packet.

In a possible implementation, the first data packet and the plurality of second data packets are transmitted based on a TCP, and sequence numbers of the plurality of second data packets are the same as a sequence number of the first data packet; and the apparatus further includes an obtaining module, configured to obtain a mapping relationship between the sequence number of the first data packet and a redundant sequence number, where the redundant sequence number is a sum of the sequence number of the first data packet and n, and n is determined based on a duplicate threshold corresponding to the TCP.

In a possible implementation, the apparatus further includes a retransmission module, configured to: based on a received acknowledgment message for any data packet among the first data packet and the plurality of second data packets, for a third data packet that is in the data stream and that is sent before the any data packet but is unacknowledged, obtain, from the mapping relationship, a redundant sequence number corresponding to a sequence number of the any data packet; and if a difference between the redundant sequence number and a sequence number of the third data packet is greater than or equal to the duplicate threshold corresponding to the TCP, trigger retransmission of a payload of the third data packet.

In a possible implementation, the apparatus further includes a second determining module, configured to: when first duration elapses after the first data packet is added to a send queue, if no data packet belonging to the data stream is added to the send queue, determine that the first data packet is the tail packet of the data stream; or determine, based on an identifier that indicates the tail packet and that is carried in the first data packet, that the first data packet is the tail packet of the data stream.

According to a third aspect, a data transmission device is provided. The data transmission device includes a processor. The processor is coupled to a memory. The memory stores at least one program instruction or code, and the at least one program instruction or code is loaded and executed by the processor, to enable the data transmission device to implement the method according to any one of the first aspect or the possible implementations of the first aspect.

Optionally, there are one or more processors, and there are one or more memories.

Optionally, the memory may be integrated with the processor, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a fourth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the communication apparatus is enabled to perform the method according to any one of the first aspect or the possible implementations of the first aspect.

According to a fifth aspect, a computer-readable storage medium is provided. The storage medium stores at least one instruction, and the at least one instruction is loaded and executed by a processor, to enable a computer to implement the method according to any one of the first aspect or the possible implementations of the first aspect.

According to a sixth aspect, a computer program (product) is provided. The computer program (product) includes computer program code, and when the computer program code is run by a computer, the computer is enabled to perform the methods according to the foregoing aspects.

According to a seventh aspect, a chip is provided, including a processor, configured to: invoke, from a memory, instructions stored in the memory and run the instructions, to enable a communication device in which the chip is installed to perform the method according to any one of the first aspect or the possible implementations of the first aspect.

According to an eighth aspect, another chip is provided, including an input interface, an output interface, a processor, and a memory. The input interface, the output interface, the processor, and the memory are connected to each other through an internal connection path. The processor is configured to execute code in the memory. When the code is executed, the processor is configured to perform the method according to any one of the first aspect or the possible implementations of the first aspect.

It should be understood that, for beneficial effects achieved by the technical solutions in the second aspect to the eighth aspect and the corresponding possible implementations in this application, refer to the foregoing technical effects in the first aspect and the corresponding possible implementations. Details are not described herein again.

## BRIEF DESCRIPTION OF DRAWINGS

FIG. 1 is a diagram of a data packet forwarding process according to an embodiment of this application;
FIG. 2 is a diagram of an implementation environment for a data transmission method according to an embodiment of this application;
FIG. 3 is a flowchart of a data transmission method according to an embodiment of this application;
FIG. 4 is a diagram of a data transmission process according to an embodiment of this application;
FIG. 5 is a diagram of another data transmission process according to an embodiment of this application;
FIG. 6 is a diagram of a structure of a data transmission apparatus according to an embodiment of this application;
FIG. 7 is a diagram of a structure of a data transmission device according to an embodiment of this application; and
FIG. 8 is a diagram of a structure of another data transmission device according to an embodiment of this application.

**DESCRIPTION OF EMBODIMENTS**

To make the objectives, technical solutions, and advantages of this application clearer, the following further describes the implementations of this application in detail with reference to the accompanying drawings.

In the field of communication technologies, in a case in which a packet loss occurs in a data stream in a transmission process, when fast retransmission cannot function, only an RTO mechanism can be triggered. In the RTO mechanism, a sender starts to retransmit a data packet if the sender waits for one RTO time after sending the data packet but still does not receive an acknowledgment message, for example, an acknowledgment (acknowledgment, ACK) packet, that corresponds to the data packet and that is returned by a receiver. Usually, the RTO time is set to hundreds of milliseconds (milliseconds, ms). Therefore, lost packet retransmission triggered by the RTO mechanism has large impact on a transmission delay.

A main reason why the RTO mechanism is triggered is that the sender does not receive acknowledgment messages for all data packets in the data stream after sending the data stream. One of important reasons why the sender does not receive the acknowledgment messages for all the data packets in the data stream is that a data packet at a tail of the data stream is lost. That is, a packet loss probability of the data packet at the tail of the data stream is high. There may be one data packet or a plurality of data packets at the tail. When there is one data packet at the tail, the data packet at the tail is a tail packet. The tail packet is a last data packet in a data stream sent in sequence. When there are a plurality of data packets at the tail, the data packets at the tail are last M data packets in a data stream sent in sequence. M is a positive integer, and M may be determined based on a total quantity of data packets included in the data stream. Optionally, M is 20% of the total quantity of data packets included in the data stream. For example, if the total quantity of data packets included in the data stream is 10, M is 10*20% = 2. When sequence numbers of 10 data packets sent in sequence are 1 to 10, the data packets at the tail are a data packet 9 and a data packet 10.

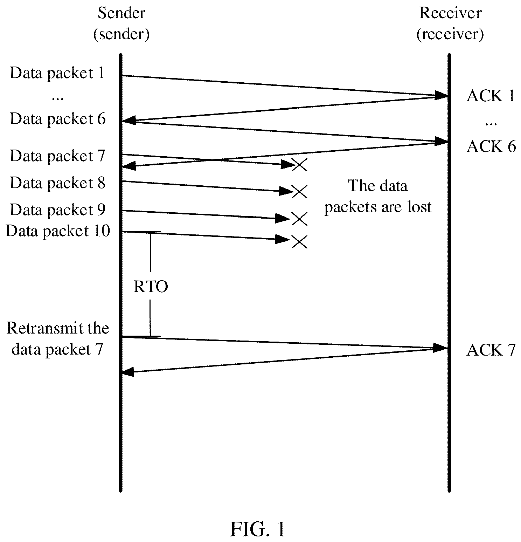

For example, FIG. 1 is a diagram of a data packet forwarding process. A sender (sender) sends a data stream to a receiver (receiver). For example, the data stream includes 10 data packets, and sequence numbers of the 10 data packets are 1 to 10. Data packets at a tail of the data stream may include a data packet 7 to a data packet 10, and a tail packet of the data stream is the data packet 10. As shown in FIG. 1, when the receiver receives a data packet 1 to a data packet 6, the receiver sends corresponding ACK 1 to ACK 6 to the sender, to indicate that the data packet 1 to the data packet 6 are acknowledged. When the data packet 7 to the data packet 10 at the tail are lost, because the receiver does not receive the subsequent data packets of the data stream to which the data packet 6 belongs, the receiver does not trigger sending of any acknowledgment message to the sender. Consequently, after sending the data packet 10, the sender needs to wait for an RTO time to trigger an RTO mechanism to retransmit the data stream from the data packet 7. This causes a transmission delay of approximately the RTO time.

In a TLP method in related technologies, a probe timeout (probe timeout, PTO) timer is set. After sending a tail packet of the data stream, the sender waits for one PTO time. If the sender does not receive an acknowledgment message corresponding to the tail packet, the sender triggers sending of one or two probe data packets, and triggers lost packet retransmission based on the probe data packet, to avoid timeout retransmission that is in the RTO mechanism and that is triggered by a loss of the tail packet of the data stream. The data stream shown in FIG. 1 is used as an example. After sending the data packet 10, the sender waits for one PTO time. If the sender does not receive an ACK 10, the sender sends a probe data packet, to trigger the receiver to return a corresponding acknowledgment message to the sender based on the probe data packet, where the probe data packet may be the data packet 10. After receiving the acknowledgment message corresponding to the probe data packet, the sender determines that the data packet 7 among unacknowledged data packets sent before the data packet 10 meets a packet loss condition, and retransmits the data packet 7. The packet loss condition may be that a difference between a sequence number of the unacknowledged data packet and a sequence number of the data packet 10 is greater than or equal to a packet threshold (packet threshold). For example, the packet threshold is 3. In this case, only the data packet 7 meets the packet loss condition, and thus, only fast retransmission of the data packet 7 can be triggered.

Therefore, in the TLP method, a transmission delay of approximately a PTO plus one round-trip time (round-trip time, RTT) is caused when a plurality of data packets at the tail are consecutively lost. The PTO is usually set to a time in milliseconds. The RTT is a time from when the sender sends a data packet to the receiver to when the sender receives an acknowledgment message returned by the receiver based on the data packet. Generally, the RTT ranges from tens of microseconds to hundreds of microseconds. In other words, the transmission delay in the TLP method in the related technologies is still large. In addition, due to determining of the packet loss condition, fast retransmission of a lost packet that does not meet the packet loss condition still cannot be triggered. Besides, the PTO is usually set based on the RTT. For example, a larger RTT indicates a larger value to which the PTO is set, and a smaller RTT indicates a smaller value to which the PTO is set. As a result, accuracy of setting of the PTO depends on accuracy of the RTT. However, the RTT changes based on a change of a network status. Therefore, it is difficult to obtain an accurate RTT, and consequently, it is also difficult to set an accurate PTO.

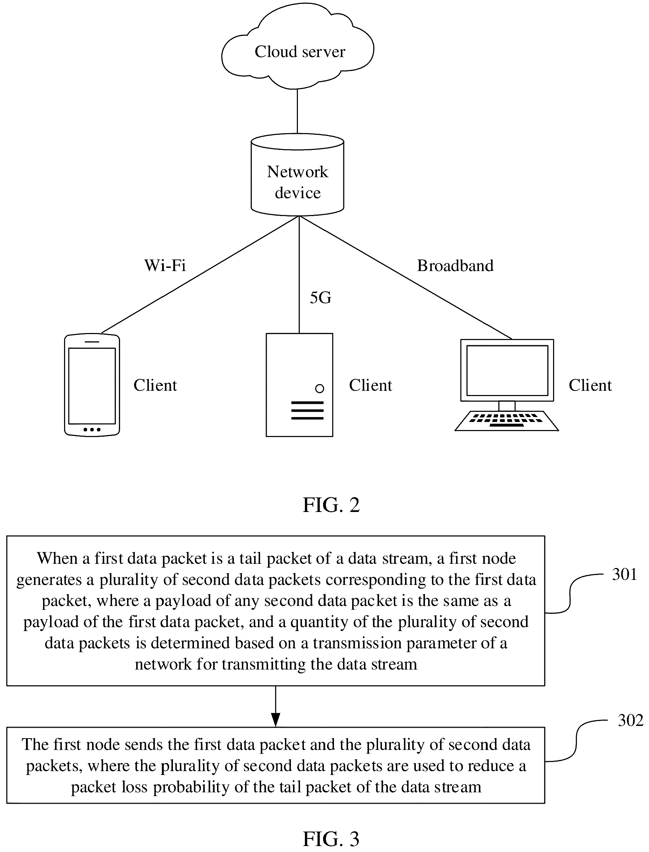

An embodiment of this application provides a data transmission method, according to which a sender performs redundancy protection on a tail packet of a data stream. This can reduce a packet loss probability of the tail packet of the data stream, thereby reducing a transmission delay caused by a loss of the tail packet of the data stream. An implementation environment for the data transmission method is not limited in embodiments of this application. Optionally, the implementation environment for the data transmission method may be any data stream transmission scenario. For example, the method may be performed by an entity that transmits a data stream in the any data stream transmission scenario. For example, FIG. 2 is a diagram of an implementation environment for a data transmission method according to an embodiment of this application.

As shown in FIG. 2, an example in which the implementation environment for the data transmission method is a cloud service download scenario is used. The implementation environment may include a cloud server (server) and a plurality of clients (clients). Optionally, the cloud server may be directly or indirectly connected to any one of the clients through wired or wireless communication. This is not limited in this application. For example, the any one client is connected to the cloud server through a network device, and the any one client may be connected to the network device by using a wireless fidelity (wireless fidelity, Wi-Fi) technology, a 5th generation mobile communication technology (5th generation mobile communication technology, 5G), a wired broadband technology, or the like.

The cloud server may be network nodes at various levels through which a network system provides a services for the client, and is a smallest unit for routing and scheduling based on a data request sent by the client. The client may be any electronic product that can perform human-machine interaction with a user in one or more manners such as a keyboard, a touchpad, a touchscreen, a remote control, a voice interaction device, or a handwriting device. For example, the client may be a personal computer (personal computer, PC), a smartphone, a personal digital assistant (personal digital assistant, PDA), a wearable device, a pocket PC PPC (pocket PC, PPC), a tablet computer, a smart in-vehicle infotainment, or the like.

In this embodiment of this application, a connection is established between the client and the cloud server, the client initiates a data request, and the cloud server obtains, through a cloud network, data corresponding to the data request and transmits the data to the client. For example, the client requests, via an application (application, APP) such as a music application or an album application, to download a corresponding file, and the cloud server pulls the file from the cloud network and transmits the file to the client. The file corresponds to the data stream in embodiments of this application. For example, a size of the file is 1 megabyte (megabyte, MB), and an effective transmission bandwidth is 40 megabits per second (megabits per second, Mbps). A time required for the cloud server to transmit the file to the client is 1*8/40 = 0.2s = 200 ms.

If a loss of a data packet at a tail of the file triggers timeout retransmission in an RTO mechanism, an RTO usually increases exponentially from 200 ms. To be specific, a retransmission delay caused by triggering one RTO is 200 ms, a retransmission delay caused by triggering two RTOs is 200 + 400 = 600 ms, and a retransmission delay caused by triggering three RTOs is 200 + 400 + 800 = 1400 ms. Therefore, a transmission delay caused by the loss of the data packet at the tail triggering the RTO mechanism is greater than the time required for transmitting the file. This severely affects an overall time to complete file transmission, resulting in low data transmission efficiency.

Refer to FIG. 3. An example in which a first node performs the method is used. FIG. 3 is a flowchart of a data transmission method according to an embodiment of this application. For example, the method may be applied to the implementation environment shown in FIG. 2, and the first node is the cloud server shown in FIG. 2. The cloud server shown in FIG. 2 corresponds to a sender of data stream transmission, and the client shown in FIG. 2 corresponds to a receiver of data stream transmission. As shown in FIG. 3, the data transmission method includes, but is not limited to, the following steps 301 and 302.

301: When a first data packet is a tail packet of a data stream, the first node generates a plurality of second data packets corresponding to the first data packet, where a payload of any second data packet is the same as a payload of the first data packet, and a quantity of the plurality of second data packets is determined based on a transmission parameter of a network for transmitting the data stream.

In this embodiment of this application, the first node is the sender of data stream transmission, and a second node is the receiver of data stream transmission when the first node transmits the data stream to the second node. The first node performs redundancy protection on the tail packet of the data stream, that is, consecutively sends a plurality of redundant packets whose payloads are the same as a payload of the tail packet in addition to sending the tail packet, to increase a probability that the receiver receives the payload of the tail packet, that is, to reduce a packet loss probability of the tail packet of the data stream. Content other than the payload of the any second data packet may be the same as or different from content other than the payload of the first data packet. This is not limited in embodiments of this application. For example, in a scenario in which the data stream is transmitted based on QUIC, a sequence number in the content other than the payload of the any second data packet is different from a sequence number in the content other than the payload of the first data packet.

Before the first node generates the plurality of second data packets corresponding to the first data packet, the first node needs to determine whether the to-be-sent first data packet is the tail packet. Optionally, a manner of determining whether the first data packet is the tail packet is not limited in embodiments of this application. In a possible implementation, a first data packet that is delivered by an application layer and that is obtained by the first node carries an identifier indicating the tail packet, and the identifier is added by the application layer to the first data packet, so that the first node can directly determine, based on the identifier that indicates the tail packet and that is carried in the first data packet, that the first data packet is the tail packet. For example, if the first data packet includes an operation code and the operation code indicates that the first data packet is the tail packet, it is determined that the first data packet is the tail packet.

In another possible implementation, when first duration elapses after the first data packet is added to a send queue, if no data packet belonging to the data stream is added to the send queue, the first node determines that the first data packet is the tail packet of the data stream. The first duration may be set according to experience, or may be flexibly adjusted based on an application scenario. For example, the first duration is a time interval at which two data packets are sent. For example, the first node periodically scans the send queue, and determines, based on a scanning result, whether another data packet is added within the first duration after the first data packet is added to the send queue. Transmission interruption may be present in a process of sending the data stream. In this case, if a transmission interruption time is greater than the first duration, a tail packet identified based on the send queue is not the true tail packet of the data stream. The tail packet identified in this case is referred to as an interruption packet. As a result, according to the method, a packet loss probability of an interruption packet can be reduced, and a transmission delay of the data stream can also be reduced when the transmission interruption time is less than an RTO time.

In this embodiment of this application, the plurality of second data packets may be referred to as a plurality of redundant packets. Provided that the receiver receives any one of the plurality of redundant packets, the receiver can trigger sending of an acknowledgment message based on the received redundant packet. As a result, the sender can receive the returned acknowledgment message, and therefore, the sender can trigger fast retransmission based on the received acknowledgment message when a plurality of data packets at a tail of the data stream are consecutively lost. In other words, timeout retransmission based on an RTO mechanism is not triggered. This indicates that the method according to this embodiment of this application successfully fulfills a function. Therefore, in this embodiment of this application, a quantity of the redundant packets is determined based on the transmission parameter of the network for transmitting the data stream, so that the determined quantity of the redundant packets can not only prevent a plurality of sent tail packets from being consecutively lost but also prevent a waste of transmission resources due to an excessively large redundant quantity. In this way, a determined redundant quantity of the plurality of tail packets better meets a data transmission requirement.

In a possible implementation, the transmission parameter of the network may include at least one of a packet loss rate, a rate, a bandwidth, a delay, a throughput, an RTT, and consecutive packet loss rates for different unit quantities. For example, the transmission parameter includes the RTT. A manner of determining the quantity of the plurality of second data packets based on the transmission parameter may be: obtaining a current RTT of the network, and determining, based on a correspondence between an RTT and a redundant quantity, a redundant quantity corresponding to the current RTT of the network, where the redundant quantity corresponding to the current RTT of the network is the quantity of the plurality of second data packets. The correspondence between the RTT and the redundant quantity may be obtained based on historical transmissions of the network. Optionally, a larger RTT corresponds to a larger redundant quantity, and a smaller RTT corresponds to a smaller redundant quantity. For example, a maximum quantity of consecutively lost packets for any RTT is determined based on historical transmissions, and a redundant quantity corresponding to the any RTT is determined based on the maximum quantity.

For example, the transmission parameter includes the consecutive packet loss rates that are for the different unit quantities and that correspond to the network. A manner in which the first node determines the quantity of the plurality of second data packets based on the transmission parameter before generating the plurality of second data packets corresponding to the first data packet may be: performing function fitting on the consecutive packet loss rates that are for the different unit quantities and that correspond to the network, to obtain a function relationship between a redundant quantity and a success probability, where the success probability is a probability that at least one of the redundant quantity of data packets that are consecutively sent is received; and obtaining a redundant quantity corresponding to a success probability greater than or equal to a probability threshold in the function relationship, and determining the quantity of the plurality of second data packets based on the redundant quantity corresponding to the success probability greater than or equal to the probability threshold. The quantity of the plurality of second data packets may also be referred to as a quantity of redundant packets. A consecutive packet loss rate corresponding to any unit quantity is a probability that the any unit quantity of data packets are consecutively lost. For example, the unit quantity is 1, and the consecutive packet loss rate corresponding to the unit quantity is a probability that one data packet is consecutively lost; or the unit quantity is 2, and the consecutive packet loss rate corresponding to the unit quantity is a probability that two data packets are consecutively lost. The different unit quantities may include 1, 2, ..., and D, where D is a positive integer greater than 2.

In this embodiment of this application, the probability that at least one of the redundant quantity of data packets is received is a probability that the redundant quantity of data packets trigger fast retransmission, and the probability that the redundant quantity of data packets trigger fast retransmission is a probability that the redundant quantity of data packets successfully fulfill a function. That the at least one of the redundant quantity of data packets is received indicates that the redundant quantity of data packets are not consecutively lost. In other words, if the redundant quantity of data packets are not consecutively lost in the network, the at least one of the redundant quantity of data packets is received. Therefore, a sum of a probability that the redundant quantity of data packets are consecutively lost and the probability that at least one of the redundant quantity of data packets is received is 1. In other words, a success probability corresponding to any redundant quantity may be obtained by calculating a difference between 1 and a probability that the any redundant quantity of data packets are consecutively lost.

Optionally, a fitting method for performing function fitting on the consecutive packet loss rates that are for the different unit quantities and that correspond to the network is not limited in embodiments of this application. For example, function fitting may be performed by using an independent event model, a Bernoulli model, or a logistic (logistic) regression analysis model. For example, a function relationship, between the redundant quantity and the success probability, obtained by performing fitting by using the logistic regression analysis model may be shown in Formula (1):

$$Pr_{succ}(\mathrm{K}) = 1 - Pr_{loss}(\mathrm{K}) = \frac{(1-p)e^{r\mathrm{K}}}{1 + (1-p)(e^{r\mathrm{K}} - 1)} \text{ Formula (1)}$$

$Pr_{succ}(\mathrm{K})$ represents a probability that at least one of K redundant packets is received, namely, a probability that the K redundant packets successfully fulfill a function. $Pr_{loss}(\mathrm{K})$ represents a probability that the K redundant packets are consecutively lost. $p$ represents an average packet loss rate corresponding to the network. $r$ represents a network status factor. $e^{r\mathrm{K}}$ represents an exponential function with $e$ as a base. $e$ is a natural constant in mathematics.

In this embodiment of this application, the average packet loss rate $p$ may be obtained through statistical analysis based on a data transmission situation of the network over a historical time. For example, a first quantity of data packets transmitted over the historical time and a second quantity of data packets lost over the historical time are counted, and a ratio of the second quantity to the first quantity is calculated to obtain an average packet loss rate over the historical time. A length of the historical time is not limited in embodiments of this application, and the historical time may be any period before the method is implemented. Optionally, before function fitting is performed on the consecutive packet loss rates respectively corresponding to the different unit quantities, the consecutive packet loss rates respectively corresponding to the different unit quantities also need to be obtained first. Likewise, the consecutive packet loss rates respectively corresponding to the different unit quantities may be obtained through statistical analysis based on the data transmission situation of the network over the historical time. Details are not described herein again.

The network status factor $r$ may be obtained by substituting consecutive packet loss rates that are known and that respectively correspond to a plurality of unit quantities into Formula (1) and solving Formula (1). For example, $p2$ represents a previously obtained packet loss rate of two consecutively lost data packets, that is, $Pr_{loss}(\mathrm{K}) = p2$. The known average packet loss rate $p$, K = 2, and $Pr_{succ}(\mathrm{K}) = 1 - p2$ are substituted into Formula (1), and Formula (1) is solved to obtain $r$. For example, the average packet loss rate is $p = 0.05$, and $r = 1.2$. After Formula (1) is obtained through fitting, a redundant quantity corresponding to $Pr_{succ}(K)$ greater than or equal to the probability threshold may be obtained by solving Formula (1). In other words, a value range of K that corresponds to $Pr_{succ}(\mathrm{K}) \geq$ the probability threshold and that is obtained through solving is the redundant quantity. The probability threshold may be set according to experience, or may be flexibly adjusted based on an application scenario.

Optionally, a manner of determining the quantity of the plurality of second data packets based on the redundant quantity may be: using any positive integer within a redundant quantity range as the quantity of the plurality of second data packets. For example, the probability threshold is 0.9999. A value range of K corresponding to $Pr_{succ}(K)$ greater than or equal to 0.9999 is determined, by solving Formula (1), to be greater than or equal to 5.6. In this case, the quantity of the plurality of second data packets may be 6, 7, 8, ..., or the like. The quantity of the plurality of second data packets that is obtained in this way is not excessively small. Therefore, it can be ensured that a probability that at least one of the plurality of second data packets is received is greater than or equal to 0.9999. This effectively reduces the packet loss probability of the tail packet of the data stream, thereby preventing the plurality of sent tail packets from being consecutively lost.

Alternatively, a manner of determining the quantity of the plurality of second data packets based on the redundant quantity may be rounding up the redundant quantity to obtain the quantity of the plurality of second data packets. For example, the probability threshold is still 0.9999. The quantity of the plurality of second data packets that is obtained by rounding up a value range of K is 6. The quantity of the plurality of second data packets that is obtained in this way is not excessively large. This avoids a waste of transmission resources of the network due to an excessively large quantity of the plurality of sent second data packets, thereby reducing a redundant rate of the tail packet.

In conclusion, after the first node determines the quantity of the plurality of second data packets, for example, the quantity of the plurality of second data packets is K and K is a positive integer, the first node may generate K second data packets corresponding to the first data packet. In different data transmission scenarios, each of the plurality of second data packets corresponds to different sequence numbers. Descriptions are provided below by using examples with reference to the following two scenarios.

Scenario 1: The first data packet and the plurality of second data packets are transmitted based on the QUIC.

In Scenario 1, the QUIC configures a new sequence number for each data packet regardless of whether the data packet is an original packet or a retransmitted packet of the data stream, so that the QUIC can distinguish whether a returned acknowledgment message is an ACK for the original packet or the retransmitted packet. This avoids a problem in a TCP-based retransmission mechanism that it is difficult to distinguish whether a data packet is an original packet or a retransmitted packet. Therefore, in Scenario 1, sequence numbers of the plurality of second data packets generated in this embodiment of this application are different from a sequence number of the first data packet. For example, the sequence number of the first data packet is N, and the quantity of the plurality of second data packets is K. The sequence numbers of the plurality of second data packets are $N + n$, $N + n + 1$, ..., and $N + n + K - 1$. Both K and N are positive integers, and n may be determined based on a packet threshold corresponding to the QUIC. For example, (packet threshold - 1) $\leq n$.

In the QUIC-based transmission scenario, a process of triggering fast retransmission includes: determining that any data packet is lost, and retransmitting the any data packet. A condition for determining that the any data packet is lost includes: The any data packet is unacknowledged, the any data packet is sent earlier than an acknowledged data packet, and a difference between a sequence number of the any data packet and a sequence number that is the largest among an acknowledged data packet is greater than or equal to the packet threshold (packet threshold). The packet threshold may be set according to experience, or may be flexibly adjusted based on an application scenario. For example, the packet threshold is 3.

Therefore, the packet threshold corresponding to the QUIC is used for the first node in the QUIC-based transmission scenario to determine, based on that a difference between a sequence number an unacknowledged data packet and the sequence number that is the largest among the acknowledged data packet is greater than or equal to the packet threshold, that the unacknowledged data packet is lost. In this case, $n \geq$ (packet threshold - 1). As a result, a sequence number $N + n$ of a 1st second data packet among the plurality of second data packets cannot be less than the packet threshold, and when any data packet sent before the first data packet is lost, fast retransmission of the any data packet can be triggered by acknowledging the 1st second data packet among the plurality of second data packets. In other words, the sequence numbers of the plurality of second data packets are set by using n. In this way, the method can trigger fast retransmission of each of the plurality of data packets at the tail that are consecutively lost, thereby improving data retransmission efficiency.

Optionally, on the basis that n is determined based on the packet threshold corresponding to the QUIC, a value range of n may be further narrowed down with reference to K, N, and a maximum sequence number allowed by the QUIC. The maximum sequence number allowed by the QUIC is a maximum sequence number that is defined in the QUIC and that is allowed to be set for a data packet. For example, (packet threshold - 1) $\leq n \leq$ (maximum sequence number allowed by QUIC - N - K + 1). In this case, on the basis that the sequence number $N + n$ of the 1st second data packet among the plurality of second data packets cannot be less than the packet threshold, a sequence number $N + n + K - 1$ of a last second data packet among the plurality of second data packets cannot exceed the maximum sequence number allowed by the QUIC due to limitation of $n \leq$ (maximum sequence number allowed by QUIC - N - K + 1). This further improves accuracy of setting of the sequence numbers of the plurality of second data packets.

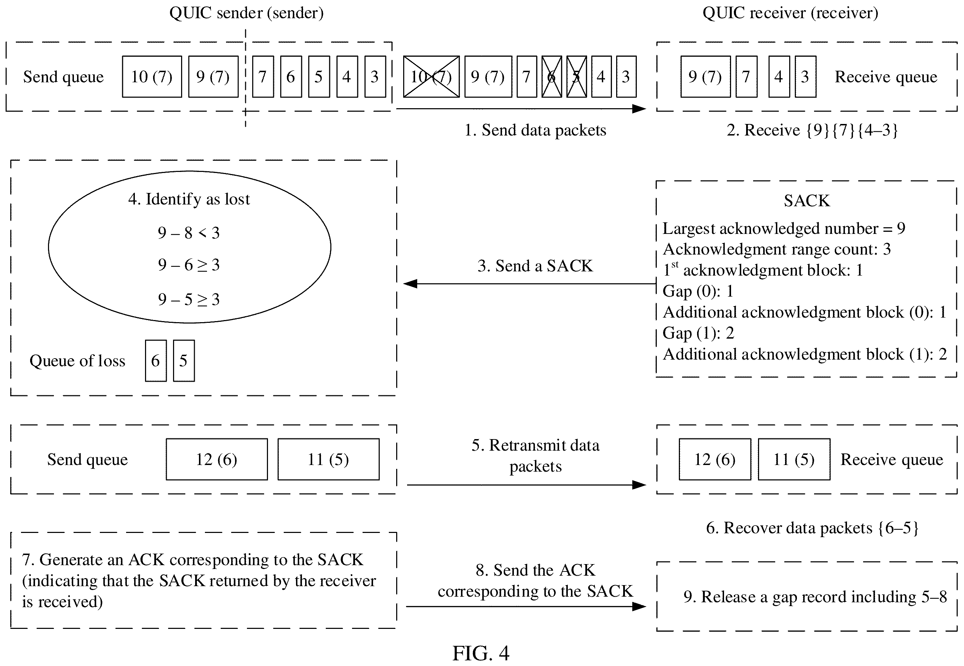

For example, FIG. 4 is a diagram of a data transmission process. The first node corresponds to a QUIC sender (sender) shown in FIG. 4, and the second node corresponds to a QUIC receiver (receiver) shown in FIG. 4. For example, a value of K is 2, and a value of n is 2. A send queue of the QUIC sender includes a data packet 3 to a data packet 7 of a data stream that are to be sent. The data packet 7 is a tail packet. That is, the first data packet corresponds to the data packet 7. Therefore, the QUIC sender generates two second data packets corresponding to the data packet 7: a data packet 9 (7) and a data packet 10 (7). A sequence number of the data packet 9 (7) is $7 + 2 = 9$. A payload of the data packet 9 (7) is a payload of the data packet 7. A sequence number of the data packet 10 (7) is $7 + 2 + 1 = 10$. A payload of the data packet 10 (7) is the payload of the data packet 7. The QUIC sender consecutively sends the data packet 3 to the data packet 7, the data packet 9 (7), and the data packet 10 (7) in sequence to the QUIC receiver by using the send queue.

In another possible implementation, in the QUIC-based transmission scenario, a condition for determining that the any data packet is lost may alternatively include: The any data packet is unacknowledged, the any data packet is sent earlier than a data packet with a largest sequence number among acknowledged data packets, and a time earlier exceeds a time threshold. The time threshold may be set according to experience, or may be flexibly adjusted based on an application scenario. For example, the time threshold is a time required for consecutively sending three data packets. Optionally, in this case, the sequence numbers of the plurality of second data packets generated by the first node may be N + 1, N + 2, ..., and N + K - 1. That is, there is no need to set n for the sequence numbers. Instead, when sending times of the plurality of second data packets are recorded, a time of the time threshold is added to the original sending times. As a result, when any data packet sent before the first data packet is lost, fast retransmission of the any data packet can be triggered likewise by acknowledging a 1st second data packet among the plurality of second data packets.

Scenario 2: The first data packet and the plurality of second data packets are transmitted based on a TCP.

In Scenario 1, because the TCP still uses an original sequence number of a data packet for a retransmitted data packet of the data stream, the TCP does not configure a new sequence number for the retransmitted data packet. Therefore, sequence numbers of the plurality of second data packets generated in this embodiment of this application are the same as a sequence number of the first data packet. For example, the sequence number of the first data packet is N, and the sequence numbers of the plurality of second data packets each are N. Different from N in Scenario 1, N in Scenario 2 corresponds to a byte sequence number range to which a data packet in the TCP belongs, because a sequence number of the data packet in the TCP is obtained through division into byte segments. For example, a byte sequence number range of a 1st data packet in the data stream is (1-9), and a byte sequence number range of a 2nd data packet in the data stream is (10-19). If a byte sequence range of the first data packet is (40-49), N in this embodiment of this application corresponds to the byte sequence number range (40-49). For ease of description, this embodiment of this application is described with sequence numbers instead of byte sequence number ranges by using examples. For example, a byte sequence number range (1-9) corresponds to a sequence number 1, and a byte sequence number range (10-19) corresponds to a sequence number 2.

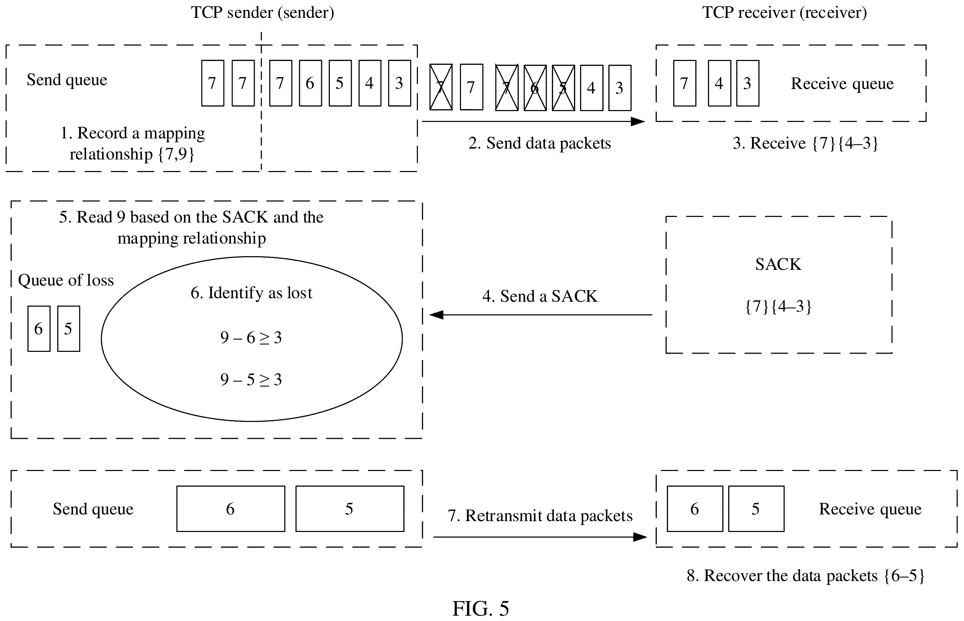

For example, FIG. 5 is a diagram of a data transmission process. The first node corresponds to a TCP sender (sender) shown in FIG. 5, and the second node corresponds to a TCP receiver (receiver) shown in FIG. 5. A send queue of the TCP sender includes a data packet 3 to a data packet 7 of a data stream that are to be sent. The data packet 7 is a tail packet. That is, the first data packet corresponds to the data packet 7. Therefore, the TCP sender generates two second data packets corresponding to the data packet 7, namely, two same data packets 7. The TCP sender consecutively sends the data packet 3 to the data packet 6, and the three same data packets 7 in sequence to the TCP receiver by using the send queue.

In the TCP-based transmission scenario, in a selective acknowledgment (selective acknowledgment, SACK) mechanism, a receiver returns, to a sender, a sequence number range carrying a received but unacknowledged data packet. In the SACK mechanism, the sender needs to receive duplicate ACKs whose quantity is a duplicate threshold (duplicate threshold, dupthresh), to trigger fast retransmission. The duplicate threshold may be set according to experience, or may be flexibly adjusted based on an application scenario. For example, the duplicate threshold is 3. For example, the sender sends a data packet 1 (0-9), a data packet 2 (10-19), a data packet 3 (20-29), a data packet 4 (30-39), and a data packet 5 (40-49) in sequence to the receiver. If the receiver receives the data packet 1, the receiver returns an ACK packet including a sequence number 10 to the sender. If the receiver receives the data packet 2, the receiver returns, to the sender, an ACK packet including a sequence number 20. If the data packet 3 is lost and the receiver receives the data packet 4, the receiver returns, to the sender, an ACK packet that includes the sequence number 20 and carries a SACK packet including sequence numbers (30-39). If the data packet 3 is lost and the receiver receives the data packet 5, the receiver returns, to the sender, an ACK packet that includes the sequence number 20 and carries a SACK packet including sequence numbers (30-49). Based on the three received duplicate ACK packets including the sequence number 20, the sender determines that the data packet 3 is lost the sender, and then triggers fast retransmission of the data packet 3.

On the basis that the SACK mechanism is used, fast retransmission can be further triggered based on a forward acknowledgment (forward acknowledgment, FACK) mechanism. In the FACK mechanism, a largest (forward-most) sequence number in a SACK is recorded to infer a packet loss situation of the data stream. For example, if a difference between a largest sequence number selectively acknowledged by a SACK and an acknowledged largest sequence number is greater than or equal to a maximum segment size (maximum segment size, MSS) multiplied by the duplicate threshold, the sender determines that a data packet corresponding to a sequence number following the acknowledged largest sequence number is lost, and triggers fast retransmission. The MSS is a maximum byte sequence number range that corresponds to a data packet and that is defined in the TCP.

For example, the sender still sends the data packet 1 (0-9), the data packet 2 (10-19), the data packet 3 (20-29), the data packet 4 (30-39), and the data packet 5 (40-49) in sequence to the receiver. If the receiver receives the data packet 1, the receiver returns an ACK packet including a sequence number 10 to the sender. It is assumed that the data packet 2, the data packet 3, and the data packet 4 are lost due to network congestion or the like. When the receiver receives the data packet 5, the receiver returns an ACK packet that includes the sequence number 10 to the sender and carries a SACK packet including sequence numbers (40-49). After receiving the ACK packet that includes the sequence number 10 and carries the SACK packet including the sequence numbers (40-49), the sender determines that the data packet 1 and the data packet 5 are received by the receiver. A largest sequence number selectively acknowledged by a SACK is 50, a largest acknowledged sequence number is 20, and the MSS is 10. Because 49 - 20 ≥ 3*10, it is determined that the data packet 2 is lost, and fast retransmission of the data packet 2 is triggered.

Based on the foregoing mechanism for triggering fast retransmission in the TCP, in this embodiment of this application, after the plurality of second data packets corresponding to the first data packet are generated, the sequence numbers of the plurality of second data packets are the same as the sequence number of the first data packet. Therefore, after generating the plurality of second data packets corresponding to the first data packet, the first node obtains a mapping relationship between the sequence number of the first data packet and a redundant sequence number. The redundant sequence number is a sum of the sequence number of the first data packet and n. n may be determined based on the duplicate threshold corresponding to the TCP. For a manner of determining n based on the duplicate threshold corresponding to the TCP in Scenario 2, refer to a manner of determining n based on the packet threshold corresponding to the QUIC in Scenario 1. For example, (duplicate threshold - 1) ≤ n ≤ (maximum sequence number allowed by QUIC - N - K + 1) For example, the sequence number of the first data packet is still N, and the redundant sequence number is N + n. In this case, when the first node receives the acknowledgment message for the first data packet, the first node may map the sequence number of the first data packet to the redundant sequence number, and further determine the packet loss situation of the data stream based on the redundant sequence number. For example, as shown in FIG. 5, the duplicate threshold is 3, and n is 2. After generating the two redundant data packets 7, the TCP sender records a mapping relationship {7, 9} or records a mapping relationship {7*MSS, 9*MSS }.

302: The first node sends the first data packet and the plurality of second data packets, where the plurality of second data packets are used to reduce the packet loss probability of the tail packet of the data stream.

In this embodiment of this application, a payload of each of the plurality of sent second data packets is the same as the payload of the first data packet, and the first data packet is the tail packet of the data stream. Therefore, sending of the plurality of second data packets can reduce a packet loss probability of the payload of the tail packet of the data stream, thereby reducing a transmission delay caused by a loss of the tail packet. In addition, the quantity of the second data packets is determined based on the consecutive packet loss rates that are for the different unit quantities and that correspond to the network. As a result, a probability that the plurality of sent second data packets are consecutively lost is low. In other words, the probability that at least one of the plurality of second data packets is received is improved. This significantly reduces the packet loss probability of the tail packet of the data stream. In other words, it is maximally ensured that the tail packet of the data stream is not lost.

In a possible implementation, for example, the first node sends the first data packet and the plurality of second data packets to the second node. The second node may receive at least one data packet among the first data packet and the plurality of second data packets, and trigger, based on the received at least one data packet, returning of a corresponding acknowledgment message to the first node. The acknowledgment message indicates that the first data packet is acknowledged, that is, indicates that the tail packet of the data stream is received. When the first node receives an acknowledgment message returned by the second node for any data packet among the first data packet and the plurality of second data packets, the first node may determine, based on the received acknowledgment message for the any data packet among the first data packet and the plurality of second data packets, the packet loss situation of the data stream, that is, whether there is a lost data packet in the data stream, and perform fast retransmission of the determined lost data packet without waiting for the RTO mechanism to trigger timeout retransmission. This avoids a retransmission delay caused by waiting for an RTO time, thereby effectively reducing the transmission delay of the data stream.

In this embodiment of this application, for different transmission protocols or different lost packet retransmission mechanisms, a type and content of the acknowledgment message may vary, and therefore, a manner in which the first node determines the packet loss situation of the data stream based on the acknowledgment message also varies. For example, the acknowledgment message includes an ACK packet, where the ACK packet indicates that the first data packet is acknowledged, and the ACK packet includes the sequence number of the first data packet. Alternatively, the acknowledgment message includes a SACK packet, where the SACK packet indicates that a received data packet among the first data packet and a data packet sent before the first data packet is acknowledged, and the SACK packet includes a sequence number of the received data packet.

Optionally, in Scenario 1, after the first node sends the first data packet and the plurality of second data packets, based on the received acknowledgment message for the any data packet among the first data packet and the plurality of second data packets, for a third data packet that is in the data stream and that is sent before the any data packet but is unacknowledged, if a difference between a sequence number of the any data packet and a sequence number of the third data packet is greater than or equal to the packet threshold, the first node determines that the third data packet is lost, and triggers retransmission of a payload of the third data packet.

For example, refer to FIG. 4. The QUIC receiver receives, in a receive queue, the data packet 9, the data packet 7, and the data packets 4 and 3 of the data stream. In this case, the QUIC receiver returns, to the QUIC sender, a SACK packet corresponding to the received data packets. The SACK packet includes a largest acknowledged (largest acknowledged) number being 9, an acknowledgment range count (ack range count) being 3, a 1st acknowledgment block (first ack block) being 1, a gap (GAP) (0) being 1, an additional acknowledgment block (additional ack block) (0) being 1, a gap (GAP) (1) being 2, and an additional acknowledgment block (additional ack block) (1) being 2.

In the SACK packet shown in FIG. 4, the largest acknowledged (largest acknowledged) number is 9; the acknowledgment range count (ack range count) is 3, which indicates that a quantity of acknowledgment blocks carried in the SACK packet is 3; the 1st acknowledgment block (first ack block) is 1, which indicates that a 1st acknowledgment block starting from 9 includes one data packet, that is, the data packet 9 is received and the data packet 9 corresponds to the any data packet that triggers sending of the acknowledgment message; the gap (GAP) (0) is 1, which indicates that a 1st gap block starting from 9 includes one data packet, that is, a data packet 8 is not received; the additional acknowledgment block (additional ack block) (0) is 1, which indicates that a 2nd acknowledgment block starting from 9 includes one data packet, that is, the data packet 7 is received; the gap (GAP) (1) is 2, which indicates that a 2nd gap block starting from 9 includes two data packets, that is, the data packets 6 and 5 are not received; and the additional acknowledgment block (additional ack block) (1) is 2, which indicates that a 3rd acknowledgment block starting from 9 includes two data packets, that is, the data packets 4 and 3 are received.

The QUIC sender finds, based on the received SACK packet, that the data packet 8 and the data packets 6 and 5 in the data stream are not received, that is, the data packet 8 and the data packets 6 and 5 may be lost. Then, an example in which the packet threshold is 3 is used, and the QUIC sender calculates a difference between the largest acknowledged number 9 and a sequence number of the data packet 6 as 9 - 6 = 3, and a difference between the largest acknowledged number 9 and a sequence number of the data packet 5 as 9 - 5 = 4. Because 3 and 4 meet a condition of being greater than or equal to the packet threshold of 3, the QUIC sender identifies the data packets 6 and 5 as lost data packets, and adds the data packets 6 and 5 to a lost (lost) queue. For the data packet 8, the QUIC sender may calculate a difference between the largest acknowledged number 9 and a sequence number of the data packet 8 as 9 - 8 = 1. Because 1 does not meet the condition of being greater than or equal to the packet threshold of 3, the QUIC sender does not identify the data packet 8 as a lost data packet. Alternatively, based on that the tail packet of the data stream is the data packet 7, that is, the data stream originally does not include the data packet 8, the QUIC sender directly ignores a gap that is a sequence number 8 and that is in the acknowledgment message.

Further, the QUIC sender retransmits a payload of the data packet 6 and a payload of the data packet 5. For example, the QUIC sender adds, to the send queue, two data packets 11 and 12 whose sequence numbers are new, where the sequence number of the data packet 11 is 11, a payload of the data packet 11 is the payload of the data packet 5, the sequence number of the data packet 12 is 12, and a payload of the data packet 12 is the payload of the data packet 6. This implements fast retransmission of the data packet 6 and the data packet 5. The QUIC sender retransmits the data packet 11 and the data packet 12. If the QUIC receiver receives the retransmitted data packet 11 and the retransmitted data packet 12, the QUIC receiver determines, based on stream offset (offset) information carried in the data packet 11 and the data packet 12, that the data packets 6 and 5 in the data stream are recovered. In this way, transmission of the data stream is completed. A stream offset is used for the receiver to determine a position of a data packet in a data stream. In this embodiment of this application, when a data packet at a tail of the data stream is lost, fast retransmission is triggered by sending the redundant data packet 9. A retransmission delay caused by transmitting the data packet 9 is approximately one RTT. Compared with waiting for an RTO time or a PTO time to trigger retransmission in related technologies, this reduces a time required for triggering retransmission.

Because the QUIC is implemented in a user mode, the method provided in this embodiment of this application can be implemented by modifying a QUIC code library at an application layer of the first node without a need to modify a kernel of an operating system. This facilitates deployment. In addition, according to a description in the request for comments (request for comments, RFC) 9000, when the QUIC receiver receives data packets with a same stream offset in one data stream a plurality of times, a data packet with a duplicate payload may be discarded. For the plurality of sent second data packets in this embodiment of this application, the second node may directly discard a received duplicate payload by using the foregoing feature. Therefore, there is no need to modify the second node used as the receiver. This further facilitates deployment.

Optionally, in Scenario 2, after the first node sends the first data packet and the plurality of second data packets, based on the received acknowledgment message for the any data packet among the first data packet and the plurality of second data packets, for a third data packet that is in the data stream and that is sent before the any data packet but is unacknowledged, the first node obtains, from the mapping relationship, a redundant sequence number corresponding to a sequence number of the any data packet. If a difference between the redundant sequence number and a sequence number of the third data packet is less than or equal to the duplicate threshold corresponding to the TCP, the first node determines that the third data packet is lost, and triggers retransmission of a payload of the third data packet. Therefore, mapping relationships to which the sequence numbers of the plurality of second data packets correspond are recorded by using n, and whether a data packet is lost is determined based on the mapping relationship. In this way, the method can trigger fast retransmission of each of the plurality of data packets at the tail that are consecutively lost, thereby improving data retransmission efficiency.

For example, refer to FIG. 5. The TCP receiver receives, in a receive queue, the data packet 7 and the data packets 4 and 3 of the data stream. In this case, the TCP receiver returns, to the TCP sender, a SACK packet corresponding to the received data packets. The SACK packet includes sequence numbers {7} and {4-3}, which indicates that the data packet 7 is acknowledged and the data packets 4 and 3 are acknowledged. The TCP sender finds, based on the received SACK packet, that the data packets 6 and 5 in the data stream may be lost, and adds the data packets 6 and 5 to a lost queue. Then, an example in which the quantity K of the plurality of second data packets is 2 and the duplicate threshold is 3 is used, and the TCP sender further determines whether the data packets 6 and 5 are lost.

In a possible implementation, in FIG. 5, the first node records the mapping relationship {7, 9} when generating the plurality of second data packets. After receiving the SACK, the first node reads, from the mapping relationship, a redundant sequence number 9 corresponding to a largest sequence number 7 in the SACK, and calculates a difference between the redundant sequence number 9 and a sequence number of the data packet 6 as 9 - 6 = 3, and a difference between the redundant sequence number 9 and a sequence number of the data packet 5 as 9 - 5 = 4. Because 3 and 4 meet a condition of being greater than or equal to the duplicate threshold of 3, the first node identifies the data packets 6 and 5 as lost data packets. Alternatively, the first node records the mapping relationship {7*MSS, 9*MSS} when generating the plurality of second data packets. In this case, the first node reads, from the mapping relationship, a redundant sequence number 9*MSS corresponding to a sequence number of the data packet 7, and calculates a difference between the redundant sequence number 9 and a sequence number of the data packet 6 as (9 - 6)*MSS = 3*MSS, and a difference between the redundant sequence number 9 and a sequence number of the data packet 5 as (9 - 5)*MSS = 4*MSS. Because 3*MSS and 4*MSS meet a condition of being greater than or equal to the duplicate threshold 3*MSS, the first node identifies the data packets 6 and 5 as lost data packets.

Further, the TCP sender retransmits a payload of the data packet 6 and a payload of the data packet 5. For example, the TCP sender adds the data packet 6 and the data packet 5 to the send queue again, and then retransmits the data packet 5 and the data packet 6 to the TCP receiver. This implements fast retransmission of the data packet 5 and the data packet 6. If the TCP receiver receives the retransmitted data packet 5 and the retransmitted data packet 6, the TCP receiver recovers the lost data packets 6 and 5. In this way, transmission of the data stream is completed. In this embodiment of this application, when a data packet at a tail of the data stream is lost, fast retransmission is triggered by sending a 2nd redundant data packet 7. A retransmission delay caused by transmitting the 2nd redundant data packet 7 is approximately one RTT. This also reduces a time required for triggering retransmission.

In another possible implementation, the acknowledgment message includes a plurality of duplicate ACK packets, where the plurality of ACK packets indicate that the third data packet is lost. In this case, the first node directly retransmits the payload of the third data packet based on a NACK packet. Alternatively, the acknowledgment message includes a loss acknowledgment (not acknowledgment, NACK) packet, where the NACK packet indicates that the third data packet is lost. In this case, the first node directly retransmits the payload of the third data packet based on the NACK packet.

In this embodiment of this application, after receiving the acknowledgment message returned by the second node, the first node sends, to the second node, an ACK packet corresponding to the acknowledgment message, to indicate that the acknowledgment message returned by the second node is received. Therefore, after receiving the ACK packet corresponding to the acknowledgment message, the second node can determine, based on the ACK packet corresponding to the acknowledgment message, that the first data packet and a data packet preceding the first data packet in the data stream are successfully received, and the second node does not need to maintain packet loss information corresponding to the data stream. For example, refer to FIG. 4. After receiving an ACK packet sent by the QUIC sender for the SACK packet, the QUIC receiver releases a gap record including 5-8, determines that payloads of the data packets 5 to 8 are received, and no longer includes the gap in a subsequently fed back SACK packet.

According to the data transmission method provided in this embodiment of this application, redundancy protection is performed on the tail packet of the data stream, that is, a plurality of redundant tail packets are sent, to reduce the packet loss probability of the tail packet, avoid data retransmission that is in the RTO mechanism or a TLP mechanism and that is triggered by the loss of the tail packet, and thus avoid a waiting delay caused by triggering the RTO mechanism or the TLP mechanism. This reduces the transmission delay of the data stream, and improves data transmission quality and performance. In addition, in this embodiment of this application, a redundant quantity of the plurality of tail packets is determined based on the transmission parameter of the network for transmitting the data stream. This can not only prevent the plurality of sent tail packets from being consecutively lost but also prevent a waste of transmission resources due to an excessively large redundant quantity. In this way, the determined redundant quantity of the plurality of tail packets better meets the data transmission requirement.

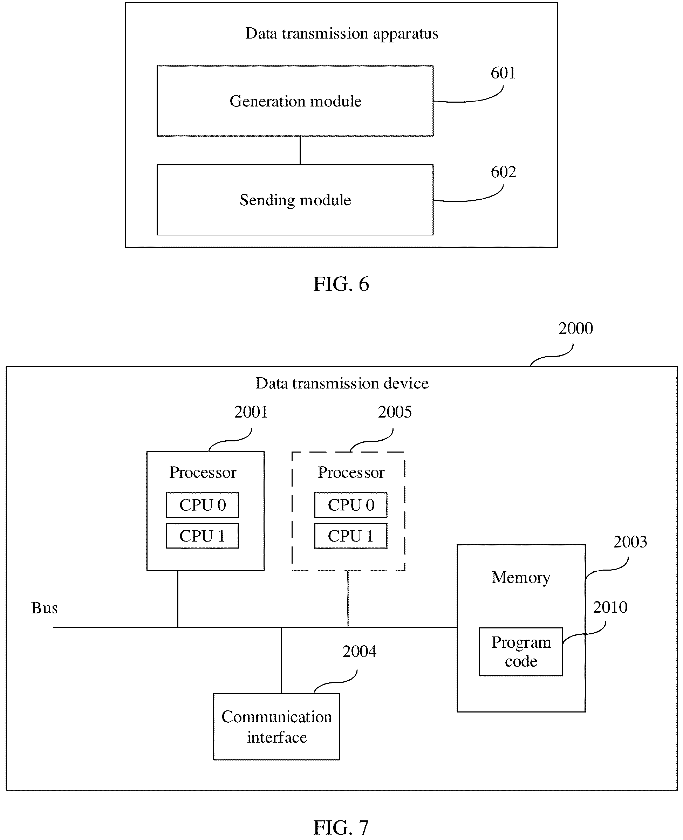

The foregoing describes the data transmission method in embodiments of this application. In correspondence to the foregoing method, an embodiment of this application further provides a data transmission apparatus. FIG. 6 is a diagram of a structure of a data transmission apparatus according to an embodiment of this application. Based on the following plurality of modules shown in FIG. 6, the data transmission apparatus shown in FIG. 6 can perform all or some of operations performed by the first node. It should be understood that the apparatus may include more additional modules than the shown modules, or a part of the shown modules are omitted. This is not limited in this embodiment of this application. As shown in FIG. 6, the apparatus includes:

a generation module 601, configured to: when a first data packet is a tail packet of a data stream, generate a plurality of second data packets corresponding to the first data packet, where a payload of any second data packet is the same as a payload of the first data packet, and a quantity of the plurality of second data packets is determined based on a transmission parameter of a network for transmitting the data stream; and
a sending module 602, configured to send the first data packet and the plurality of second data packets, where the plurality of second data packets are used to reduce a packet loss probability of the tail packet of the data stream.

In a possible implementation, the transmission parameter includes consecutive packet loss rates for different unit quantities, and the apparatus further includes: a fitting module, configured to perform function fitting on the consecutive packet loss rates that are for the different unit quantities and that correspond to the network, to obtain a function relationship between a redundant quantity and a success probability, where the success probability is a probability that at least one of the redundant quantity of data packets that are consecutively sent is received; and a first determining module, configured to: obtain a redundant quantity corresponding to a success probability greater than or equal to a probability threshold in the function relationship, and determine the quantity of the plurality of second data packets based on the redundant quantity corresponding to the success probability greater than or equal to the probability threshold.

In a possible implementation, the first data packet and the plurality of second data packets are transmitted based on QUIC, the quantity of the plurality of second data packets is K, a sequence number of the first data packet is N, and both K and N are positive integers; and sequence numbers of the plurality of second data packets are different from the sequence number of the first data packet, the sequence numbers of the plurality of second data packets are $N + n$, $N + n + 1$, ..., and $N + n + K - 1$, and n is determined based on a packet threshold corresponding to the QUIC.

In a possible implementation, the apparatus further includes a retransmission module, configured to: based on a received acknowledgment message for any data packet among the first data packet and the plurality of second data packets, for a third data packet that is in the data stream and that is sent before the any data packet but is unacknowledged, if a difference between a sequence number of the any data packet and a sequence number of the third data packet is greater than or equal to the packet threshold, trigger retransmission of a payload of the third data packet.

In a possible implementation, the first data packet and the plurality of second data packets are transmitted based on a TCP, and sequence numbers of the plurality of second data packets are the same as a sequence number of the first data packet; and the apparatus further includes an obtaining module, configured to obtain a mapping relationship between the sequence number of the first data packet and a redundant sequence number, where the redundant sequence number is a sum of the sequence number of the first data packet and n, and n is determined based on a duplicate threshold corresponding to the TCP.

In a possible implementation, the apparatus further includes a retransmission module, configured to: based on a received acknowledgment message for any data packet among the first data packet and the plurality of second data packets, for a third data packet that is in the data stream and that is sent before the any data packet but is unacknowledged, obtain, from the mapping relationship, a redundant sequence number corresponding to a sequence number of the any data packet; and if a difference between the redundant sequence number and a sequence number of the third data packet is greater than or equal to the duplicate threshold corresponding to the TCP, trigger retransmission of a payload of the third data packet.

In a possible implementation, the apparatus further includes a second determining module, configured to: when first duration elapses after the first data packet is added to a send queue, if no data packet belonging to the data stream is added to the send queue, determine that the first data packet is the tail packet of the data stream; or determine, based on an identifier that indicates the tail packet and that is carried in the first data packet, that the first data packet is the tail packet of the data stream.

According to the data transmission apparatus provided in this embodiment of this application, redundancy protection is performed on the tail packet of the data stream, that is, a plurality of redundant tail packets are sent, to reduce a packet loss probability of the tail packet, avoid data retransmission that is in an RTO mechanism or a TLP mechanism and that is triggered by a loss of the tail packet, and thus avoid a waiting delay caused by triggering the RTO mechanism or the TLP mechanism. This reduces a transmission delay of the data stream, and improves data transmission quality and performance. In addition, in this embodiment of this application, a redundant quantity of the plurality of tail packets is determined based on the transmission parameter of the network for transmitting the data stream. This can not only prevent the plurality of sent tail packets from being consecutively lost but also prevent a waste of transmission resources due to an excessively large redundant quantity. In this way, the determined redundant quantity of the plurality of tail packets better meets a data transmission requirement.

It should be understood that, when the apparatus provided in FIG. 6 implements functions of the apparatus, division into the foregoing functional modules is merely used as an example for description. During actual application, the foregoing functions may be allocated to different functional modules for implementation based on a requirement. In other words, an inner structure of a device is divided into different functional modules, to implement all or some of the functions described above. In addition, the apparatus provided in the foregoing embodiment and the method embodiments pertain to a same concept. For a specific implementation process of the apparatus, refer to the method embodiments. Details are not described herein again.

FIG. 7 is a diagram of a structure of a data transmission device 2000 according to an example embodiment of this application. The data transmission device 2000 shown in FIG. 7 is configured to perform operations related to the data transmission method shown in FIG. 3. The data transmission device 2000 is, for example, a cloud server, a switch, or a router. The data transmission device 2000 may be implemented by using a general bus architecture.

As shown in FIG. 7, the data transmission device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field programmable gate array (field programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the data transmission device 2000 further includes a bus. The bus is configured to transfer information between components of the data transmission device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one line is used for representation in FIG. 7, but this does not mean that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other compact disc storage, optical disk storage (including compact disc, laser disc, optical disc, digital versatile disc, Blu-ray disc, and the like), a magnetic disk storage medium or another magnetic storage device, or any other medium that can be used to carry or store expected program code in a form of an instruction or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 is any apparatus such as a transceiver, and is configured to communicate with another device or a communication network. The communication network may be the Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the data transmission device 2000 to communicate with another device.

During specific implementation, in an embodiment, the processor 2001 may include one or more CPUs, for example, a CPU 0 and a CPU 1 shown in FIG. 7. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the data transmission device 2000 may include a plurality of processors, for example, the processor 2001 and a processor 2005 shown in FIG. 7. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the data transmission device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, or a sensing device.

In some embodiments, the memory 2003 is configured to store program code 2010 for executing the solutions of this application, and the processor 2001 may execute the program code 2010 stored in the memory 2003. In other words, the data transmission device 2000 may implement, by using the processor 2001 and the program code 2010 in the memory 2003, the data transmission method provided in the method embodiments. The program code 2010 may include one or more software modules. Optionally, the processor 2001 may also store program code or instructions for executing the solutions of this application.

The data transmission device 2000 in this embodiment of this application may correspond to the data transmission device in the foregoing method embodiments. The processor 2001 in the data transmission device 2000 reads instructions in the memory 2003, so that the data transmission device 2000 shown in FIG. 7 can perform all or some of operations performed by the first node.

Specifically, the processor 2001 is configured to: when a first data packet is a tail packet of a data stream, generate, by a first node, a plurality of second data packets corresponding to the first data packet, where a payload of any second data packet is the same as a payload of the first data packet, and a quantity of the plurality of second data packets is determined based on a transmission parameter of a network for transmitting the data stream; and send, by the first node, the first data packet and the plurality of second data packets, where the plurality of second data packets are used to reduce a packet loss probability of the tail packet of the data stream.

For brevity, another optional implementation is not described herein again.

The data transmission device 2000 may further correspond to the data transmission apparatus shown in FIG. 6. Each functional module in the data transmission apparatus is implemented by using software of the data transmission device 2000. In other words, the functional modules included in the data transmission apparatus are generated after the processor 2001 of the data transmission device 2000 reads the program code 2010 stored in the memory 2003.

The steps of the data transmission method shown in FIG. 3 are completed by using an integrated logic circuit of hardware in the processor of the data transmission device 2000 or instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with the hardware in the processor. To avoid repetition, details are not described herein again.

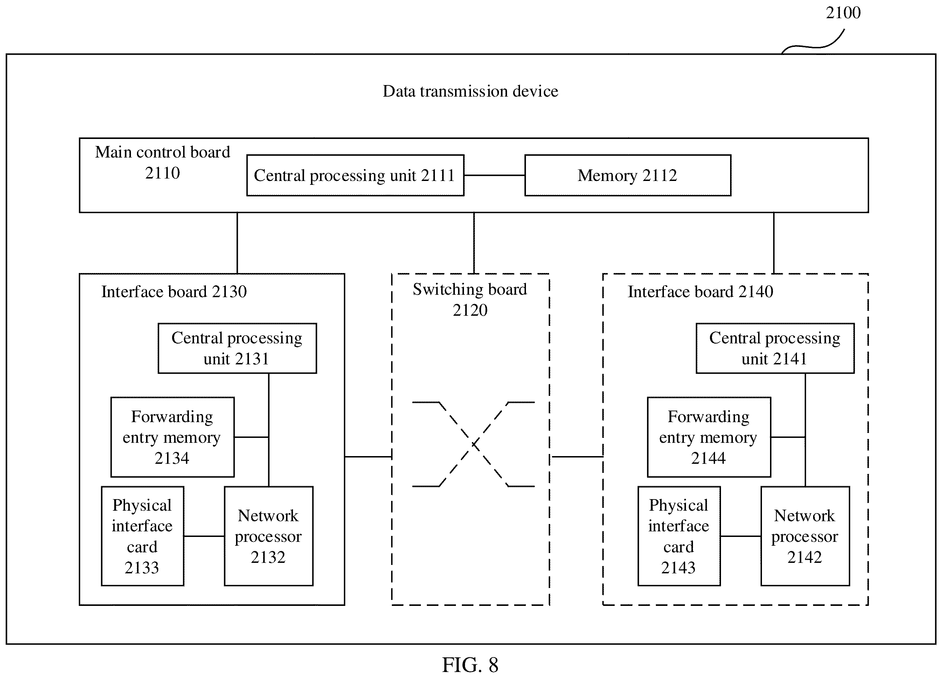

FIG. 8 is a diagram of a structure of a data transmission device 2100 according to another example embodiment of this application. The data transmission device 2100 shown in FIG. 8 is configured to perform all or some operations related to the data transmission method shown in FIG. 3. The data transmission device 2100 is, for example, a cloud server, a switch, or a router. The data transmission device 2100 may be implemented by using a general bus architecture.

As shown in FIG. 8, the data transmission device 2100 includes a main control board 2110 and an interface board 2130.

The main control board is also referred to as a main processing unit (main processing unit, MPU) or a route processor card (route processor card). The main control board 2110 is configured to control and manage components in the data transmission device 2100, including functions of route calculation, device management, device maintenance, and protocol processing. The main control board 2110 includes a central processing unit 2111 and a memory 2112.

The interface board 2130 is also referred to as a line processing unit (line processing unit, LPU), a line card (line card), or a service board. The interface board 2130 is configured to provide various service interfaces and implement data packet forwarding. The service interfaces include but are not limited to an Ethernet interface, a POS (Packet over SONET/SDH) interface, and the like. The Ethernet interface is, for example, a flexible Ethernet service interface (Flexible Ethernet Clients, FlexE Clients). The interface board 2130 includes a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA).

Specifically, the network processor 2132 is configured to forward a received packet based on a forwarding table stored in the forwarding entry memory 2134. If a destination address of the packet is an address of the data transmission device 2100, the network processor 2132 sends the packet to a CPU (for example, the central processing unit 2131) for processing. If a destination address of the packet is not an address of the data transmission device 2100, the network processor 2132 finds, from a forwarding table based on the destination address, a next hop and an egress interface that correspond to the destination address, and forwards the packet to the egress interface corresponding to the destination address. Processing an uplink packet may include: processing an inbound interface of the packet and searching a forwarding table. Processing a downlink packet may include: searching a forwarding table, and the like. In some embodiments, the central processing unit may also perform a function of a forwarding chip, for example, implement software forwarding based on a general-purpose CPU, so that no forwarding chip is required in the interface board.

The physical interface card 2133 is configured to implement a physical layer interconnection function, so that original traffic enters the interface board 2130 from the physical interface card 2133, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU. Therefore, the network processor 2132 is not required in the physical interface card 2133.

Optionally, the data transmission device 2100 includes a plurality of interface boards. For example, the data transmission device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the data transmission device 2100 further includes a switching board 2120. The switching board 2120 may also be referred to as a switch fabric unit (switch fabric unit, SFU). When the data transmission device 2100 has a plurality of interface boards, the switching board 2120 is configured to complete data exchange between the interface boards. For example, the interface board 2130 and the interface board 2140 may communicate with each other by using the switching board 2120.

The main control board 2110 is coupled to the interface board. For example, the main control board 2110, the interface board 2130, the interface board 2140, and the switching board 2120 are connected to a system backboard by using a system bus for interworking. In a possible implementation, an inter-process communication (inter-process communication, IPC) protocol channel is established between the main control board 2110 and the interface board 2130, and between the main control board 2110 and the interface board 2140. The main control board 2110 communicates with the interface board 2130 and the interface board 2140 through IPC channels.

Logically, the data transmission device 2100 includes a control plane and a forwarding plane. The control plane includes the main control board 2110 and the central processing unit 2111. The forwarding plane includes components such as the forwarding entry memory 2134, the physical interface card 2133, and the network processor 2132 that perform forwarding. The control plane performs functions such as a function of a router, a function of generating a forwarding table, a function of processing signaling and protocol packets, and a function of configuring and maintaining a state of the data transmission device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same data transmission device.

It should be noted that there may be one or more main control boards, and when there are a plurality of main control boards, a primary main control board and a secondary main control board may be included. There may be one or more interface boards. A stronger data processing capability of the data transmission device indicates that more interface boards are provided. There may also be one or more physical interface cards on the interface board. There may be no switching board or one or more switching boards. When there are a plurality of switching boards, load balancing and redundancy backup may be implemented together. In a centralized forwarding architecture, the data transmission device does not need the switching board, and the interface board processes service data of the entire system. In a distributed forwarding architecture, the data transmission device may have at least one switching board, and data exchange between a plurality of interface boards is implemented by using the switching board, to provide large-capacity data exchange and processing capabilities. Therefore, data access and processing capabilities of the data transmission device in the distributed architecture are greater than those of the data transmission device in the centralized architecture. Optionally, the data transmission device may alternatively be in a form in which there is only one board, that is, there is no switching board, and functions of the interface board and the main control board are integrated on the board. In this case, the central processing unit on the interface board and the central processing unit on the main control board may be combined into one central processing unit on the board to perform superimposed functions of the two central processing units. This form of data transmission device (for example, a data transmission device such as a low-end switch or router) has weak data exchange and processing capabilities. A specific architecture that is to be used depends on a specific networking deployment scenario. This is not limited herein.

In a specific embodiment, the data transmission device 2100 corresponds to the data transmission apparatus shown in FIG. 6. In some embodiments, the generation module 601 in the data transmission apparatus shown in FIG. 6 is equivalent to the network processor 2132 in the data transmission device 2100, and the sending module 602 is equivalent to the physical interface card 2133 in the data transmission device 2100.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method to be performed by the first node.

An embodiment of this application further provides a data transmission device. The data transmission device includes a processor. The processor is coupled to a memory. The memory stores at least one program instruction or code, and the at least one program instruction or code is loaded and executed by the processor, to enable the data transmission device to implement the data transmission method shown in FIG. 3. Optionally, there are one or more processors, and there are one or more memories.

Optionally, the memory may be integrated with the processor, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

It should be understood that the processor may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to enable a computer to implement any one of the foregoing data transmission methods.

An embodiment of this application further provides a computer program (product). When the computer program is executed by a computer, a processor or the computer is enabled to perform corresponding steps and/or procedures in the foregoing method embodiments.

An embodiment of this application further provides a chip, including a processor, configured to: invoke, from a memory, instructions stored in the memory and run the instructions, to enable a communication device on which the chip is installed to perform any one of the foregoing data transmission methods.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing data transmission methods.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk)), or the like.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. The person of ordinary skill in the art may use different methods to implement the described functions for each particular application, but it should not be considered that the implementation goes beyond the scope of this application.

The person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

When software is used to implement the embodiments, all or a part of the embodiments may be implemented in a form of a computer program product. The computer program product includes one or more computer program instructions. For example, the method according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, functions of the program modules may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing described system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the modules is merely logical function division and may be other division during actual application. For example, a plurality of modules or components may be combined or integrated into another system, or some features may be ignored or not performed. In addition, the displayed or discussed mutual couplings or direct couplings or communication connections may be indirect couplings or communication connections implemented through some interfaces, devices, or modules, or may be electrical, mechanical, or other forms of connections.

The modules described as separate parts may or may not be physically separate, and parts displayed as modules may or may not be physical modules, in other words, may be located at one position, or may be distributed on a plurality of network modules. Some or all of the modules may be selected based on actual requirements to achieve the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n$^{th}$", and neither a quantity nor an execution sequence is limited. It should also be understood that although the following descriptions use terms such as "first" and "second" to describe various elements, these elements should not be limited by the terms. These terms are merely used to distinguish one element from another. For example, a first image may be referred to as a second image, and similarly, a second image may be referred to as a first image without departing from the scope of the various examples. Both the first image and the second image may be images, and in some cases, may be separate and different images.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

In this application, the term "at least one" means one or more, and the term "a plurality of" in this application means two or more. For example, a plurality of second data packets mean two or more second data packets. The terms "system" and "network" are often used interchangeably in this specification.

It should be understood that the terms used in the descriptions of the various examples in this specification are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that a term "and/or" used in this specification indicates and includes any or all possible combinations of one or more of the associated listed items. The term "and/or" describes an association relationship for describing associated objects and represents that three relationships may exist. For example, A and/or B may indicate the following three cases: Only A exists, both A and B exist, and only B exists. In addition, the character "/" in this application generally indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or groups thereof not excluded.

It should be further understood that the term "if" ("if") may be interpreted as a meaning of "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based on only A, but B may alternatively be determined based on A and/or other information.

It should be further understood that "one embodiment", "an embodiment", or "a possible implementation" mentioned throughout this specification means that specific features, structures, or characteristics related to embodiments or the implementations are included in at least one embodiment of this application. Therefore, "in one embodiment" or "in an embodiment" or "in a possible implementation" appearing throughout this specification does not necessarily refer to a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A data transmission method, wherein the method comprises:

   when a first data packet is a tail packet of a data stream, generating, by a first node, a plurality of second data packets corresponding to the first data packet, wherein a payload of any second data packet is the same as a payload of the first data packet, and a quantity of the plurality of second data packets is determined based on a transmission parameter of a network for transmitting the data stream; and
   sending, by the first node, the first data packet and the plurality of second data packets, wherein the plurality of second data packets are used to reduce a packet loss probability of the tail packet of the data stream.

2. The method according to claim 1, wherein the transmission parameter comprises consecutive packet loss rates that are for different unit quantities and that correspond to the network, and before the generating, by a first node, a plurality of second data packets corresponding to the first data packet, the method further comprises:

   performing function fitting on the consecutive packet loss rates that are for the different unit quantities and that correspond to the network, to obtain a function relationship between a redundant quantity and a success probability, wherein the success probability is a probability that at least one of the redundant quantity of data packets that are consecutively sent is received; and
   obtaining a redundant quantity corresponding to a success probability greater than or equal to a probability threshold in the function relationship, and determining the quantity of the plurality of second data packets based on the redundant quantity corresponding to the success probability greater than or equal to the probability threshold.

3. The method according to claim 1 or 2, wherein the first data packet and the plurality of second data packets are transmitted based on quick user datagram protocol internet connections QUIC, the quantity of the plurality of second data packets is K, a sequence number of the first data packet is N, and both K and N are positive integers; and sequence numbers of the plurality of second data packets are different from the sequence number of the first data packet, the sequence numbers of the plurality of second data packets are N + n, N + n + 1, ..., and N + n + K - 1, and n is determined based on a packet threshold corresponding to the QUIC.

4. The method according to claim 3, wherein after the sending, by the first node, the first data packet and the plurality of second data packets, the method further comprises:
   based on a received acknowledgment message for any data packet among the first data packet and the plurality of second data packets, for a third data packet that is in the data stream and that is sent before the any data packet but is unacknowledged, if a difference between a sequence number of the any data packet and a sequence number of the third data packet is greater than or equal to the packet threshold, triggering retransmission of a payload of the third data packet.

5. The method according to claim 1 or 2, wherein the first data packet and the plurality of second data packets are transmitted based on a transmission control protocol TCP, and sequence numbers of the plurality of second data packets are the same as a sequence number of the first data packet; and
   after the generating, by a first node, a plurality of second data packets corresponding to the first data packet, the method further comprises:
   obtaining a mapping relationship between the sequence number of the first data packet and a redundant sequence number, wherein the redundant sequence number is a sum of the sequence number of the first data packet and n, and n is determined based on a duplicate threshold corresponding to the TCP.

6. The method according to claim 5, wherein after the sending, by the first node, the first data packet and the plurality of second data packets, the method further comprises:
based on a received acknowledgment message for any data packet among the first data packet and the plurality of second data packets, for a third data packet that is in the data stream and that is sent before the any data packet but is unacknowledged, obtaining, from the mapping relationship, a redundant sequence number corresponding to a sequence number of the any data packet; and if a difference between the redundant sequence number and a sequence number of the third data packet is greater than or equal to the duplicate threshold, triggering retransmission of a payload of the third data packet.

7. The method according to any one of claims 1 to 6, wherein before the generating, by a first node, a plurality of second data packets corresponding to the first data packet, the method further comprises:

when first duration elapses after the first data packet is added to a send queue, if no data packet belonging to the data stream is added to the send queue, determining, by the first node, that the first data packet is the tail packet of the data stream; or
determining, by the first node based on an identifier that indicates the tail packet and that is carried in the first data packet, that the first data packet is the tail packet of the data stream.

8. A data transmission apparatus, wherein the apparatus comprises:

a generation module, configured to: when a first data packet is a tail packet of a data stream, generate a plurality of second data packets corresponding to the first data packet, wherein a payload of any second data packet is the same as a payload of the first data packet, and a quantity of the plurality of second data packets is determined based on a transmission parameter of a network for transmitting the data stream; and
a sending module, configured to send the first data packet and the plurality of second data packets, wherein the plurality of second data packets are used to reduce a packet loss probability of the tail packet of the data stream.

9. The apparatus according to claim 8, wherein the transmission parameter comprises consecutive packet loss rates for different unit quantities, and the apparatus further comprises:

a fitting module, configured to perform function fitting on the consecutive packet loss rates that are for the different unit quantities and that correspond to the network, to obtain a function relationship between a redundant quantity and a success probability, wherein the success probability is a probability that at least one of the redundant quantity of data packets that are consecutively sent is received; and
a first determining module, configured to: obtain a redundant quantity corresponding to a success probability greater than or equal to a probability threshold in the function relationship, and determine the quantity of the plurality of second data packets based on the redundant quantity corresponding to the success probability greater than or equal to the probability threshold.

10. The apparatus according to claim 8 or 9, wherein the first data packet and the plurality of second data packets are transmitted based on quick user datagram protocol internet connections QUIC, the quantity of the plurality of second data packets is K, a sequence number of the first data packet is N, and both K and N are positive integers; and sequence numbers of the plurality of second data packets are different from the sequence number of the first data packet, the sequence numbers of the plurality of second data packets are N + n, N + n + 1, ..., and N + n + K - 1, and n is determined based on a packet threshold corresponding to the QUIC.

11. The apparatus according to claim 10, wherein the apparatus further comprises:
a retransmission module, configured to: based on a received acknowledgment message for any data packet among the first data packet and the plurality of second data packets, for a third data packet that is in the data stream and that is sent before the any data packet but is unacknowledged, if a difference between a sequence number of the any data packet and a sequence number of the third data packet is greater than or equal to the packet threshold, trigger retransmission of a payload of the third data packet.

12. The apparatus according to claim 8 or 9, wherein the first data packet and the plurality of second data packets are transmitted based on a transmission control protocol TCP, and sequence numbers of the plurality of second data packets are the same as a sequence number of the first data packet; and

the apparatus further comprises:

an obtaining module, configured to obtain a mapping relationship between the sequence number of the first data packet and a redundant sequence number, wherein the redundant sequence number is a sum of the sequence number of the first data packet and n, and n is determined based on a duplicate threshold corresponding to the TCP.

13. The apparatus according to claim 12, wherein the apparatus further comprises:

a retransmission module, configured to: based on a received acknowledgment message for any data packet among the first data packet and the plurality of second data packets, for a third data packet that is in the data stream and that is sent before the any data packet but is unacknowledged, obtain, from the mapping relationship, a redundant sequence number corresponding to a sequence number of the any data packet; and if a difference between the redundant sequence number and a sequence number of the third data packet is greater than or equal to the duplicate threshold, trigger retransmission of a payload of the third data packet.

14. The method according to any one of claims 8 to 13, wherein the apparatus further comprises:

a second determining module, configured to: when first duration elapses after the first data packet is added to a send queue, if no data packet belonging to the data stream is added to the send queue, determine that the first data packet is the tail packet of the data stream; or determine, based on an identifier that indicates the tail packet and that is carried in the first data packet, that the first data packet is the tail packet of the data stream.

15. A data transmission device, wherein the data transmission device comprises a processor, the processor is coupled to a memory, the memory stores at least one program instruction or code, and the at least one program instruction or code is loaded and executed by the processor, to enable the data transmission device to implement the data transmission method according to any one of claims 1 to 7.

16. A computer-readable storage medium, wherein the computer storage medium stores at least one instruction, and the at least one instruction is loaded and executed by a processor, to enable a computer to implement the data transmission method according to any one of claims 1 to 7.

17. A computer program product, wherein the computer program product comprises computer program code, and the computer program code is loaded and executed by a computer, to enable the computer to implement the data transmission method according to any one of claims 1 to 7.

Sender
(sender)

Receiver
(receiver)

Data packet 1

...

Data packet 6

Data packet 7

Data packet 8

Data packet 9

Data packet 10

ACK 1

...

ACK 6

The data
packets are lost

RTO

Retransmit the
data packet 7

ACK 7

FIG. 1

FIG. 2

| When a first data packet is a tail packet of a data stream, a first node generates a plurality of second data packets corresponding to the first data packet, where a payload of any second data packet is the same as a payload of the first data packet, and a quantity of the plurality of second data packets is determined based on a transmission parameter of a network for transmitting the data stream | 301 |

| The first node sends the first data packet and the plurality of second data packets, where the plurality of second data packets are used to reduce a packet loss probability of the tail packet of the data stream | 302 |

FIG. 3

QUIC sender (sender)　　　　　　　　　　　　　　　　　　　　QUIC receiver (receiver)

Send queue | 10 (7) | 9 (7) | | 7 | 6 | 5 | 4 | 3 | | ⊠ | 9 (7) | 7 | ⊠ | ⊠ | 4 | 3 | | 9 (7) | 7 | 4 | 3 | Receive queue

1. Send data packets　　　　　　　　2. Receive {9}{7}{4–3}

4. Identify as lost

$9 - 8 < 3$

$9 - 6 \geq 3$

$9 - 5 \geq 3$

Queue of loss | 6 | 5 |

3. Send a SACK

SACK

Largest acknowledged number = 9
Acknowledgment range count: 3
$1^{st}$ acknowledgment block: 1
Gap (0): 1
Additional acknowledgment block (0): 1
Gap (1): 2
Additional acknowledgment block (1): 2

Send queue | 12 (6) | 11 (5) |

5. Retransmit data packets

| 12 (6) | 11 (5) | Receive queue

6. Recover data packets {6–5}

7. Generate an ACK corresponding to the SACK (indicating that the SACK returned by the receiver is received)

8. Send the ACK corresponding to the SACK

9. Release a gap record including 5–8

FIG. 4

EP 4 694 093 A1

TCP sender (sender)　　　　　　　　　　　　　　　　TCP receiver (receiver)

Send queue　| 7 | 7 | 7 | 6 | 5 | 4 | 3 |　　⊠ 7 ⊠ ⊠ ⊠ 4 3　　| 7 | 4 | 3 |　Receive queue

1. Record a mapping
relationship {7,9}

2. Send data packets

3. Receive {7}{4–3}

5. Read 9 based on the SACK and the
mapping relationship

Queue of loss

| 6 | 5 |

6. Identify as lost

$9 - 6 \geq 3$

$9 - 5 \geq 3$

4. Send a SACK

SACK

{7}{4–3}

Send queue　| 6 | 5 |

7. Retransmit data packets

| 6 | 5 |　Receive queue

8. Recover the data packets {6–5}

FIG. 5

EP 4 694 093 A1

Data transmission apparatus

Generation module 601

Sending module 602

FIG. 6

2000

Data transmission device

2001          2005

Processor          Processor

CPU 0          CPU 0

CPU 1          CPU 1

2003

Memory

2010

Program
code

Bus

2004

Communication
interface

FIG. 7

FIG. 8

## INTERNATIONAL SEARCH REPORT

| International application No. |
|---|
| **PCT/CN2024/090516** |

### A. CLASSIFICATION OF SUBJECT MATTER

H04L 69/16(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, DWPI, ENTXT, 3GPP: 数据包, 数据流, 报文, 尾包, 尾部, 末端, 末尾, 生成, 创建, 载荷, 相同, 一致, 丢包, 丢失, 冗余, 重复, 快速用户数据报文协议互联网连接, QUIC, 确认消息, ACK, 阈值, 映射, 重传超时, RTO, 尾部丢失探测, TLP; stream, packet, tail, end, generate, create, payload, identical, consistent, loss, redundancy, repetition, quick user datagram protocol internet connection, acknowledge, ACK, threshold, mapping, tail loss probe, retransmission timeout

### C. DOCUMENTS CONSIDERED TO BE RELEVANT

| Category* | Citation of document, with indication, where appropriate, of the relevant passages | Relevant to claim No. |
|---|---|---|
| X | CN 114389758 A (HUAWEI TECHNOLOGIES CO., LTD.) 22 April 2022 (2022-04-22) description, paragraphs [0004]-[0039], and figures 1 and 3 | 1-2, 7, 8-9, 14, 15-17 |
| A | CN 114531212 A (HUAWEI TECHNOLOGIES CO., LTD.) 24 May 2022 (2022-05-24) entire document | 1-17 |
| A | CN 115734404 A (DATANG MOBILE COMMUNICATIONS EQUIPMENT CO., LTD.) 03 March 2023 (2023-03-03) entire document | 1-17 |
| A | EP 3706371 A1 (HUAWEI TECHNOLOGIES CO., LTD.) 09 September 2020 (2020-09-09) entire document | 1-17 |
| A | WO 2021035541 A1 (HUAWEI TECHNOLOGIES CO., LTD.) 04 March 2021 (2021-03-04) entire document | 1-17 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 July 2024** | **25 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/090516**

| Patent document cited in search report | | | Publication date (day/month/year) | Patent family member(s) | | | Publication date (day/month/year) |
|---|---|---|---|---|---|---|---|
| CN | 114389758 | A | 22 April 2022 | None | | | |
| CN | 114531212 | A | 24 May 2022 | None | | | |
| CN | 115734404 | A | 03 March 2023 | None | | | |
| EP | 3706371 | A1 | 09 September 2020 | WO | 2019129163 | A1 | 04 July 2019 |
| | | | | EP | 3706371 | A4 | 09 December 2020 |
| | | | | EP | 3706371 | B1 | 04 October 2023 |
| | | | | US | 2020322243 | A1 | 08 October 2020 |
| | | | | US | 11606275 | B2 | 14 March 2023 |
| WO | 2021035541 | A1 | 04 March 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310518999